(19) Europäisches Patentamt
European Patent Office
Office européen des brevets

(11) Publication number: 0 101 175 B1

# (12) EUROPEAN PATENT SPECIFICATION

(45) Date of publication of patent specification: 08.10.86

(51) Int. Cl.$^4$: C 08 K 5/14

(21) Application number: 83303926.6

(22) Date of filing: 05.07.83

## (54) Blends of organic peroxides.

(30) Priority: 09.08.82 US 406406

(43) Date of publication of application: 22.02.84 Bulletin 84/08

(45) Publication of the grant of the patent: 08.10.86 Bulletin 86/41

(84) Designated Contracting States: AT BE CH DE FR GB IT LI NL SE

(58) References cited:
GB-A-2 017 110
GB-A-2 061 957

(73) Proprietor: HERCULES INCORPORATED
Hercules Plaza
Wilmington Delaware 19899 (US)

(72) Inventor: Willis, Chester Rhodes
424 Merrick Lane
Kennett Square, PA 19348 (US)

(74) Representative: Burnside, Michael et al
Michael Burnside & Partners 2 Serjeants' Inn
Fleet Street
London EC4Y 1HL (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 101 175 B1

Courier Press, Leamington Spa, England.

**Description**

This invention relates to peroxide blends with melting points below room temperature, that are useful to the cross-linking of polymers such as polyethylene, EPDM, and copolymers of ethylene and vinyl acetate.

Dicumyl peroxide and bis(alpha-*t*-butylperoxyisopropyl) benzene are known to be effective in the crosslinking of such polymers. However, because they are solids at room temperature, they have the disadvantage that they must be melted in order to be uniformly dispersed in polymers, such as polyethylene, before curing. This causes additional expense to the user and is a source of danger, as there is always the possibility of over-heating, particularly by unskilled persons, which cause rapid decomposition of the peroxide and may even result in explosion.

Blending of the solid peroxides with polymers, such as polyethylene, is not satisfactory in that it is difficult, if not impossible, to obtain uniform dispersion of the peroxide throughout the polymer. It is essential that the peroxide be uniformly dispersed in order to provide uniform curing or crosslinking of the polymer.

US—A—4202790 discloses blends of peroxides that are liquid at room temperature, for instance, at 23°C. They consist essentially either of dicumyl peroxide and cumyl isopropylcumyl peroxide, or of bis(alpha-*t*-butylperoxyisopropyl)-benzene and isopropylcumyl-*t*-butyl peroxide.

It is desirable for many purposes, such as for use in cold climates where the ambient working temperature may be well below room temperature, to provide peroxide blends that melt at even lower temperatures, for instance, at 5°C or lower. According to the invention, there is provided a blend of organic peroxides that has a liquefaction temperature of not above 23°C., containing up to 25% of bis(alpha-*t*-butylperoxyisopropyl) benzene, characterised in that it consists essentially of (1) from 40 to 60% of *t*-butyl cumyl peroxide; (2) from 5 to 25% of a mixture of the meta- and para- isomers of bis(alpha-*t*-butylperoxyisopropyl) benzene, the ratio of meta- and para- isomers being from 1.5:1 to 4:1; and (3) dicumyl peroxide to make a total of 100%, the melting point of the blend being no higher than about 5°C.

Blends according to the invention that are preferred consist essentially of from 45 to 55% of (1); from 10 to 25% of (2); and (3) to 100% as above.

Dicumyl peroxide (peroxide (3) above) has the formula:

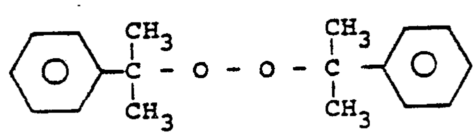

As indicated above, dicumyl peroxide is a known crosslinking agent for certain polymers, such as polyethylene, for example, US—A—2 826 570; 2 888 424 and 3 079 370. Its melting point is about 38°C.

Its usual method of preparation is well known: by the reaction of essentially equimolar portions of cumene hydroperoxide and alpha, alpha-dimethylbenzyl alcohol in an organic diluent that will not react with the reactants or the product, in the presence of a catalyst and at a temperature of from 30 to 75°C. Suitable catalysts include p-toluenesulfonic acid, sulfuric acid, boron trifluoride etherate, and benzene sulfonic acid.

Dicumyl peroxide is available commercially in purities of from 90 to 100%. Impurities present, if any, will include unreacted alcohol, unreacted hydroperoxide, alphamethylstyrene, acetophenone, and cumene.

Bis(alpha-*t*-butylperoxyisopropyl) benzene (peroxide (2) above), is well known in the art as are methods for its preparation. This bisperoxide has the formula:

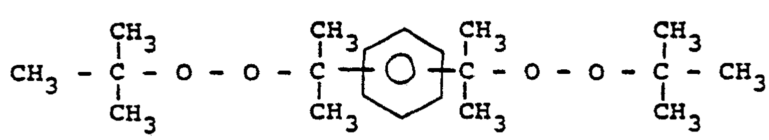

Specific examples of the bisperoxide are the meta- and para- isomers. Mixtures of the meta- and para- isomers are commercially available and are therefore normally used for this invention. The meta- and para- isomers are solid at room temperature (about 23°C.) as are all mixtures thereof. The meta isomer melts at about 52°C., the para isomer melts at about 79°C. The preferred mixtures for use in this invention will consist of the meta- and para- isomers in a proportion of from 1.5:1 to 4:1. These mixtures of the meta- and para- isomers are available commercially in purities of from 90% to 100%. Impurities present, if any, will include *t*-butyl hydroperoxide, and the meta- and para- isomers of diisopropenylbenzene and bis(2-hydroxypropyl) benzene.

Bis(alpha-*t*-butylperoxyisopropyl) benzene also is known to be a crosslinking agent for certain polymers, such as polyethylene. See U.S. patent Re. 25,941.

Tertiary butyl cumyl peroxide, peroxide (1) above, is well known in the art as are methods for its preparation. This peroxide has the formula

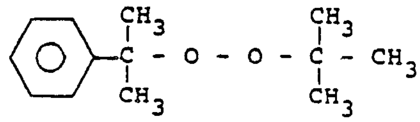

Tertiary butyl cumyl peroxide, also referred to as alpha, alpha-dimethylbenzyl *t*-butyl peroxide, has a melting point of about 15.5°C. It can be prepared in accordance with the teachings of U.S. patent 2,668,180 — see particularly Example V thereof.

Tertiary butyl cumyl peroxide is available in purities of from 90% to 100%. Impurities present, if any, will include cumene hydroperoxide, alpha, alpha-dimethylbenzyl alcohol, *t*-butyl hydroperoxide, acetophenone, and alpha-methylstyrene.

The blends according to this invention are easily and readily prepared by dissolving the desired amounts of peroxides (2) and (3) in peroxide (1) at room temperature (about 23°C.). Heat may be applied to hasten dissolution, if desired.

Table I below sets forth peroxide blends of this invention. Melting point was determined by freezing the blend to about −70°C. and then determining the temperature at which the blend became a liquid.

TABLE I

| | Dicumyl Peroxide | | t-Butyl Cumyl Peroxide | | Bis(α-t-butylperoxyisopropyl) benzene | | | |
|---|---|---|---|---|---|---|---|---|
| Example | Purity | % | Purity | % | Purity | Meta/Para Ratio | % | Melting Point °C. |
| 1 | 91.0 | 32.8 | 99.0 | 49.2 | 91.0 | 1.93/1 | 18.0 | 5.0 |
| 2 | 91.0 | 38.4 | 99.0 | 56.6 | 91.0 | 1.93/1 | 5.0 | 5.0 |
| 3 | 99.7 | 32.0 | 99.7 | 47.6 | 99.56 | 4/1 | 20.4 | 5.0 |
| 4 | 99.7 | 18.0 | 99.7 | 57.4 | 99.56 | 4/1 | 24.6 | 5.0 |
| 5 | 91.0 | 38.0 | 99.0 | 46.5 | 91.0 | 1.93/1 | 15.5 | 5.0 |
| 6 | 91.0 | 25.0 | 99.0 | 56.25 | 91.0 | 1.93/1 | 18.75 | 5.0 |
| 7 | 91.0 | 26.4 | 99.0 | 56.0 | 91.0 | 1.93/1 | 17.6 | 5.0 |
| 8 | 91.0 | 35.4 | 99.0 | 41.0 | 91.0 | 1.93/1 | 23.6 | 5.0 |
| 9 | 91.0 | 36.0 | 99.0 | 54.0 | 91.0 | 1.93/1 | 10.0 | 1.5 |
| 10 | 91.0 | 30.0 | 99.0 | 52.5 | 91.0 | 1.93/1 | 17.5 | 1.5 |
| 11 | 99.7 | 30.0 | 99.7 | 49.0 | 99.56 | 4/1 | 21.0 | 1.5 |
| 12 | 99.7 | 20.0 | 99.7 | 56.0 | 99.56 | 4/1 | 24.0 | 1.5 |
| 13 | 91.0 | 30.0 | 99.0 | 50.0 | 91.0 | 1.93/1 | 20.0 | 1.5 |

The peroxide blends of this invention are easily and readily admixed with such polymers as polyethylene to provide essentially uniform blends of polymer and peroxide. The polymer-peroxide compositions, after curing, have good physical properties. As already indicated, the blends of this invention have utility as crosslinking agents for polymers such as polyethylene, EPDM, and copolymers of ethylene and vinyl acetate.

In this specification and in the claims, all parts and percentages are by weight unless otherwise specified.

**Claims for the Contracting States: BE CH DE FR GB IT NL SE**

1. A blend of organic peroxides that has a liquefaction temperature not above 23°C., containing up to 25% of bis(alpha-*t*-butylperoxyisopropyl) benzene, characterized in that it consists essentially of (1) from 40

to 60% of *t*-butyl cumyl peroxide; (2) from 5 to 25% of a mixture of the meta- and para- isomers of bis(alpha-*t*-butylperoxyisopropyl) benzene, the ratio of meta- and para- isomers being from 1.5:1 to 4:1, and (3) dicumyl peroxide to make a total of 100%, the melting point of the blend being no higher than about 5°C.

2. A blend according to Claim 1 characterized by containing from 45 to 55% of peroxide (1), and from 10 to 25% of peroxide (2).

3. A blend according to Claim 1 or 2 characterized in that peroxide (2) of the blend is a mixture of the meta- and para- isomers in a ratio of 1.93 to 1.

4. A blend according to Claim 1 or 2 characterized in that peroxide (2) of the blend is a mixture of the meta- and para- isomers in a ratio of 4 to 1.

**Claims for the Contracting State: AT**

1. A method of preparing a blend of organic peroxides that has a liquefaction temperature not above 23°C., containing up to 25% of bis (alpha-*t*-butylperoxyisopropyl) benzene, characterized in that a blend consisting essentially of (1) from 40 to 60% of *t*-butyl cumyl peroxide; (2) from 5 to 25% of a mixture of the meta- and para- isomers of bis(alpha-*t*-butylperoxyisopropyl) benzene, this ratio of meta- and para- isomers being from 1.5:1 to 4:1; and (3) dicumyl peroxide to make a total of 100%, the melting point of the blend being no higher than about 5°C. is formed by dissolving the mixture of isomers of bis (alpha-*t*-butylperoxyisopropyl) benzene (2) and the dicumyl peroxide (3) in the t-butyl cumyl peroxide (1).

2. A method according to Claim 1 characterized by using peroxide (1) and peroxide (2) in such amounts as provide a blend containing from 45 to 55% of peroxide (1), and from 10 to 25% of peroxide (2).

3. A method according to Claim 1 or 2 characterized in that peroxide (2) is a mixture of the meta- and para- isomers in a ratio of 1.93 to 1.

4. A method according to Claim 1 or 2 characterized in that peroxide (2) is a mixture of the meta- and para- isomers in a ratio of 4 to 1.

**Patentansprüche für die Vertragsstaaten: BE CH DE FR GB IT LI NL SE**

1. Eine Mischung von organischen Peroxiden mit einer Verflüssigungstemperatur nicht über 23°C, enthaltend bis zu 25% Bis(alpha-t-butylperoxyisopropyl)benzol, dadurch gekennzeichnet, daß sie im wesentlichen besteht aus: (1) 40 bis 60% t-Butyl-cumyl-peroxid, (2) 5 bis 25% einer Mischung von Meta- und Para-Isomeren von Bis(alpha-t-butylperoxyisopropyl)-benzol, wobei das Verhältnis von Meta- und Para-Isomeren von 1,5:1 bis 4:1 beträgt und (3) Dicumylperoxid als Rest auf 100%, wobei der Schmelzpunkt der Mischung nicht höher als ungefähr 5°C beträgt.

2. Eine Mischung nach Anspruch 1, dadurch gekennzeichnet, daß sie 45 bis 55% Peroxid (1) und 10 bis 25% Peroxid (2) enthält.

3. Eine Mischung nach den Ansprüchen 1 oder 2, dadurch gekennzeichnet, daß das Peroxid (2) der Mischung ein Gemisch aus Meta- und Para-Isomeren im Verhältnis von 1,93:1 ist.

4. Eine Mischung nach den Ansprüchen 1 oder 2, dadurch gekennzeichnet, daß das Peroxid (2) der Mischung ein Gemisch aus Meta- und Para-Isomeren in einem Verhältnis von 4:1 ist.

**Patentansprüche für den Vertragsstaat: AT**

1. Ein Verfahren zur Herstellung einer Mischung von organischen Perodiden mit einer Verflüssigungstemperatur nicht über 23°C, enthaltend bis zu 25% Bis(alpha-t-butylperoxyisopropyl)benzol, dadurch gekennzeichnet, daß eine Mischung im wesentlichen bestehend aus: (1) 40 bis 60% t-Butyl-cumyl-peroxid, (2) 5 bis 25% einer Mischung von Meta- und Para-Isomeren von Bis(alpha-t-butylperoxyisopropyl)-benzol, wobei das Verhältnis von Meta- und Para-Isomeren von 1,5:1 bis 4:1 beträgt und (3) Dicumylperoxid als Rest auf 100%, wobei der Schmelzpunkt der Mischung nicht höher als ungefähr 5°C beträgt, durch Lösen der Mischung der Isomeren von Bis-alpha-t-Butylperoxyisopropyl)-benzol (2) und des Dicumylperoxids (3) in dem t-Butyl-cumyl-peroxid (1) gebildet wird.

2. Ein Verfahren nach Anspruch 1, gekennzeichnet durch die Verwendung von Peroxid (1) und von Peroxid (2) in einer solchen Menge, daß eine Mischung enthaltend 45 bis 55% Peroxid (1) und 10 bis 25% Peroxid (2) resultiert.

3. Ein Verfahren nach den Ansprüchen 1 oder 2, dadurch gekennzeichnet, daß das Peroxid (2) ein Gemisch aus Meta- und Para-Isomeren im Verhältnis von 1,93:1 ist.

4. Eine Mischung nach den Ansprüchen 1 oder 2, dadurch gekennzeichnet, daß das Peroxid (2) ein Gemisch aus Meta- und Para-Isomeren in einem Verhältnis von 4:1 ist.

**Revendications pour les Etats contractants: BE CH DE FR GB IT LI NL SE**

1. Mélange de peroxydes organiques qui a une température de liquéfaction non supérieure à 23°C, contenant jusqu'à 25% de bis(alpha-t-butylperoxyisopropyl)benzène, caractérisé en ce qu'il se compose essentiellement (1) de 40 à 60% de peroxyde de t-butyl-cumyle; (2) de 5 à 25% d'un mélange des isomères

méta- et para- du bis(alpha-t-butylperoxyisopropyl)benzène, le rapport des isomères méta- et para- étant de 1,5:1 à 4:1; et (3) de peroxyde de dicumyle pour faire un total de 100%, le point du fusion du mélange n'étant pas supérieur à environ 5°C.

2. Mélange suivant la revendication 1, caractérisé en ce qu'il contient de 45 à 55% de peroxyde (1), et de 10 à 25% de peroxyde (2).

3. Mélange suivant les revendications 1 ou 2, caractérisé en ce que le peroxyde (2) du mélange est un mélange des isomères méta- et para- dans un rapport de 1,93 à 1.

4. Mélange suivant la revendication 1 ou la revendication 2, caractérisé en ce que le peroxyde (2) du mélange est un mélange des isomères méta- et para- dans un rapport de 4 à 1.

**Revendications pour l'Etat contractant: AT**

1. Procédé de préparation d'un mélange de peroxydes organiques qui a une température de liquéfaction non supérieure à 23°C, contenant jusqu'à 25° de bis (alpha-t-butylperoxyisopropyl)benzène, caractérisé en ce qu'on forme un mélange essentiellement constitué (1) de 40 à 60% de peroxyde t-butylcumyle; (2) de 5 à 25% d'une mélange des isomères méta et para du bis(alpha-t-butylperoxyisopropyl)-benzéne, le rapport des isoméres méta et para étant de 1,5:1 à 4:1; et (3) de peroxyde de dicumyle pour faire un total de 100%, le point de fusion du mélange n'étant pas supérieur à environ 5°C, en disolvant le mélange d'isomères du bis (alpha-t-butylperoxyisopropyl)benzène (2) et le peroxyde de dicumyle (3) dans le peroxyde de t-butyle cumyle (1).

2. Procédé suivant la revendication 1, caractérisé en ce qu'on utilise le peroxyde (1) et le peroxyde (2) dans des quantités telles qu'eles fournissent un mélange contenant de 45 à 55% de peroxyde (1), et de 10 à 25% du peroxyde (2).

3. Procédé suivant les revendications 1 ou 2, caractérisé en ce que le peroxyde (2) est un mélange des isomères méta et para dans un rapport de 1,93.

4. Procédé suivant les revendication 1 ou 2, caractérisé en ce que le peroxyde (2) est un mélange des isomères méta et para dans un rapport de 4 à 1.